# EUROPEAN PATENT SPECIFICATION

(11) **EP 3 533 699 B1**
(45) Date of publication and mention of the grant of the patent: **14.10.2020**
(21) Application number: 19159031.4
(22) Date of filing: 25.02.2019
(51) Int. Cl.: B62K 25/28, B62M 7/02, B62K 11/04

(54) **ENGINE HANGER STRUCTURE OF A SADDLED VEHICLE**
MOTORAUFHÄNGERSTRUKTUR EINES SATTELFAHRZEUGS
STRUCTURE DE SUSPENSION DE MOTEUR D'UN VÉHICULE À ENFOURCHER

(30) Priority: 28.02.2018 JP 2018035858
(43) Date of publication of application: 04.09.2019
(73) Proprietor: Honda Motor Co., Ltd., Tokyo 107-8556 (JP)
(72) Inventor: ONDA, Hiroshi, Asaka-shi, Saitama 351-0024 (JP); CHENG, Yuliang, Wako-shi, Saitama 351-0024 (JP); SATO, Shin, Wako-shi, Saitama 351-0024 (JP)
(74) Representative: Weickmann & Weickmann PartmbB

(56) References cited:
- EP-A1- 3 199 440
- WO-A1-2006/120835
- GB-A- 2 084 525
- US-A1- 2014 060 952

## Description

### Technical Field

The present invention relates to an engine hanger structure, particularly to an engine hanger structure for mounting an engine of a saddled vehicle to a body frame.

### Background Art

In an engine hanger structure for mounting an engine of a saddled vehicle to a body frame, there has been known a configuration in which the engine is supported at a predetermined position by use of a long through bolt penetrating a crankcase of the engine in the transverse direction or short bolts making direct screw engagement with the crankcase from transverse directionally outer sides.

Patent Document 1 discloses, in regard of a motorcycle which includes a pair of left and right main frames extending from a head pipe toward a rear lower side of a vehicle body and a swing arm shaft-supported on rear end portions of the main frames in a swingable manner, an engine hanger structure in which short bolts are used for a front-side engine hanger extending from front end portions of the main frames toward a vehicle body lower side, whereas a through bolt is used for rear-side engine hangers projected toward a vehicle body front side at positions on the upper and lower sides of a swing arm pivot.

Further examples of engine hanger structures are disclosed on Patent Documents 2 to 5. Patent Document 2 disclosing the features of the preamble of claim 1.

### Citation List

### Patent Literature

Patent Document 1: PCT Patent Publication No. WO 2016/047341
Patent Document 2: US Patent Publication US 2014/060952 A1
Patent Document 3: PCT Patent Publication WO 2006/120835 A1
Patent Publication 4: European Patent Publication EP 3 199 440 A1
Patent Publication 5: GB Patent Publication GB 2 084 525 A

### Summary of the Invention

### Problem to be Solved by the Invention

From the viewpoint of enhancing support rigidity of an engine, the use of short bolts making direct screw engagement with a crankcase may be more preferable than the use of a through bolt susceptible to flexure under an external force generated during running. In Patent Document 1, short bolts are applied to a front-side engine hanger for realizing a rubber mount structure based on thinking vibration absorption performance important, but it is not investigated to apply short bolts to a rear-side engine hanger for enhancing support rigidity of an engine.

It is an object of the present invention to provide an engine hanger structure by which support rigidity of an engine can be enhanced through the use of short bolts.

### Solution to Problems

The present invention has a first feature in an engine hanger structure to be applied to a saddled vehicle (1) which includes a body frame (4), a swing arm (23) shaft-supporting a rear wheel (WR) in a rotatable manner, a pivot shaft (19) shaft-supporting the swing arm (23) in a swingable manner at a rear portion of the body frame (4), and an engine (E) supported on the body frame (4), wherein a pivot plate (20) shaft-supporting the pivot shaft (19) and extending on upper and lower sides of the pivot shaft (19) is provided at a rear end portion of the body frame (4), an upper-side engine hanger portion (50) and a lower-side engine hanger portion (51) are provided at positions opposite to each other on upper and lower opposite sides of the pivot shaft (19), and a rear portion of the engine (E) is supported on the upper-side engine hanger portion (50) and the lower-side engine hanger portion (51) by a pair of bolts (70, 90) making screw engagement with the engine (E) at positions opposite to each other in a transverse direction.

The present invention has a second feature in that the pivot plate (20) has a substantially rectangular shape elongated in a vertical direction in side view of a vehicle body, and the upper-side engine hanger portion (50) and the lower-side engine hanger portion (51) are configured by through-holes (50a, 51a) formed in the pivot plate (20).

The present invention has a third feature in that an upper-side extension portion (60) projecting toward the upper-side engine hanger portion (50) and a lower-side extension portion (80) extending toward the lower-side engine hanger portion (51) are formed at a rear portion of the engine (E), and the upper-side extension portion (60) is supported by the upper-side engine hanger portion (50) on a vehicle body upper side of the pivot shaft (19), whereas the lower-side extension portion (80) is supported by the lower-side engine hanger portion (51) on a vehicle body lower side of the pivot shaft (19).

The present invention has a fourth feature in that the upper-side extension portion (60) and the lower-side extension portion (80) are each formed to extend in the transverse direction, female screw portions (61, 81) in a pair in the transverse direction in which the bolts (70, 90) are put in screw engagement are formed on a same axis, and the female screw portions (61, 81) in the pair in the transverse direction communicate with each other through a hollow portion (63, 83).

The present invention has a fifth feature in that transverse directional sizes of the hollow portions (63, 83) are larger than transverse directional sizes of the female screw portions (61, 81).

The present invention has a sixth feature in that the bolts (70, 90) have head portions (70a, 90a) which are hexagonal in sectional shape, and recesses (50b, 51b) in which to accommodate the head portions (70a, 90a) are provided on transverse directionally outside of the upper-side engine hanger portion (50) and the lower-side engine hanger portion (51).

The present invention has a seventh feature in that the body frame (4) is provided with a front-side engine hanger portion (42) supporting a front portion of the engine (E), and the front portion of the engine (E) is supported on the front-side engine hanger portion (42) by a long through bolt (42a) penetrating the engine (E).

The present invention has an eighth feature in that the front-side engine hanger (42) is formed at lower end portions of a pair of left and right hanger frames (40) extending rearwardly downward from a head pipe (9) constituting the frame (4).

### Effects of the Invention

According to the first feature of the present invention, in an engine hanger structure to be applied to a saddled vehicle (1) which includes a body frame (4), a swing arm (23) shaft-supporting a rear wheel (WR) in a rotatable manner, a pivot shaft (19) shaft-supporting the swing arm (23) in a swingable manner at a rear portion of the body frame (4), and an engine (E) supported on the body frame (4), wherein a pivot plate (20) shaft-supporting the pivot shaft (19) and extending on upper and lower sides of the pivot shaft (19) is provided at a rear end portion of the body frame (4), an upper-side engine hanger portion (50) and a lower-side engine hanger portion (51) are provided at positions opposite to each other on upper and lower opposite sides of the pivot shaft (19), and a rear portion of the engine (E) is supported on the upper-side engine hanger portion (50) and the lower-side engine hanger portion (51) by a pair of bolts (70, 90) making screw engagement with the engine (E) at positions opposite to each other in a transverse direction. Therefore, the bolts independent on the transverse directionally left and right sides are applied, whereby support rigidity of an engine rear portion can be enhanced, as compared to the case where through bolts susceptible to flexure under an external force generated during running are applied.

According to the second feature of the present invention, the pivot plate (20) has a substantially rectangular shape elongated in a vertical direction in side view of a vehicle body, and the upper-side engine hanger portion (50) and the lower-side engine hanger portion (51) are configured by through-holes (50a, 51a) formed in the pivot plate (20). Therefore, support rigidity of the engine hanger portion can be enhanced, as compared to a configuration in which a stay-formed engine hanger portion extends to a vehicle body front side of the pivot plate.

According to the third feature of the present invention, an upper-side extension portion (60) projecting toward the upper-side engine hanger portion (50) and a lower-side extension portion (80) extending toward the lower-side engine hanger portion (51) are formed at a rear portion of the engine (E), and the upper-side extension portion (60) is supported by the upper-side engine hanger portion (50) on a vehicle body upper side of the pivot shaft (19), whereas the lower-side extension portion (80) is supported by the lower-side engine hanger portion (51) on a vehicle body lower side of the pivot shaft (19). Therefore, it is possible to support a rear portion of the engine by the upper and lower extension portions, while avoiding interference between the engine rear portion and the pivot.

According to the fourth feature of the present invention, the upper-side extension portion (60) and the lower-side extension portion (80) are each formed to extend in the transverse direction, female screw portions (61, 81) in a pair in the transverse direction in which the bolts (70, 90) are put in screw engagement are formed on a same axis, and the female screw portions (61, 81) in the pair in the transverse direction communicate with each other through a hollow portion (63, 83). Therefore, an increase in weight of the extension portions can be suppressed by providing the hollow portions, while enhancing support rigidity by extending the extension portions in the transverse direction.

According to the fifth feature of the present invention, transverse directional sizes of the hollow portions (63, 83) are larger than transverse directional sizes of the female screw portions (61, 81). Therefore, an increase in weight at the time when the extension portions are provided can be suppressed.

According to the sixth feature of the present invention, the bolts (70, 90) have head portions (70a, 90a) which are hexagonal in sectional shape, and recesses (50b, 51b) in which to accommodate the head portions (70a, 90a) are provided on transverse directionally outside of the upper-side engine hanger portion (50) and the lower-side engine hanger portion (51). Therefore, the head portions of the bolts can be prevented from touching the rider's legs or the like.

According to the seventh feature of the present invention, the body frame (4) is provided with a front-side engine hanger portion (42) supporting a front portion of the engine (E), and the front portion of the engine (E) is supported on the front-side engine hanger portion (42) by a long through bolt (42a) penetrating the engine (E). Therefore, bolts opposite to each other on the left and right sides are used at a rear portion of the engine where enhancement of support rigidity is demanded, and the through bolt is used at a front portion of the engine where some flexibility is demanded, whereby a desired running feeling can be obtained.

According to the eighth feature of the present invention, the front-side engine hanger (42) is formed at lower end portions of a pair of left and right hanger frames (40) extending rearwardly downward from a head pipe (9) constituting the frame (4). Therefore, the hanger frame itself has flexibility, whereby the flexibility of the long bolt can be made the most of more easily, and it is possible to make a running feeling close to an ideal running feeling.

### Brief Description of Drawings

FIG. 1 is a left side view of a motorcycle 1 to which an engine hanger structure according to an embodiment of the present invention has been applied.
FIG. 2 is a right side view of the motorcycle.
FIG. 3 is a front view of the motorcycle.
FIG. 4 is a left side view of a body frame supporting a crankcase of an engine.
FIG. 5 is a partially enlarged view of the body frame.
FIG. 6 is an enlarged side view of a rear portion of the engine.
FIG. 7 is an enlarged side view of a state in which the body frame is added to FIG. 6.
FIG. 8A is a sectional view taken along line A-A of FIG. 7.
FIG. 8B is a sectional view taken along line B-B of FIG. 7.

### Modes for Carrying Out the Invention

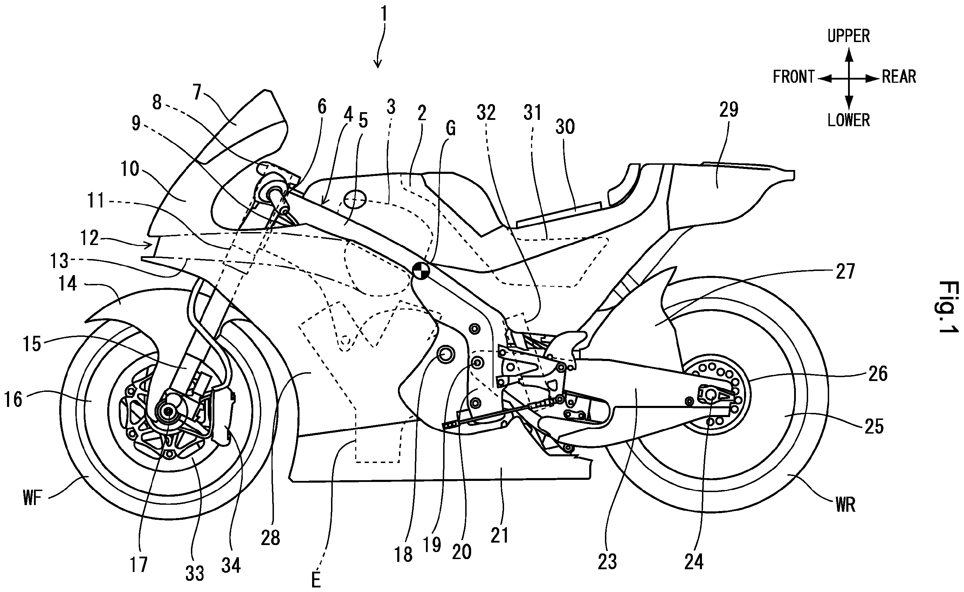

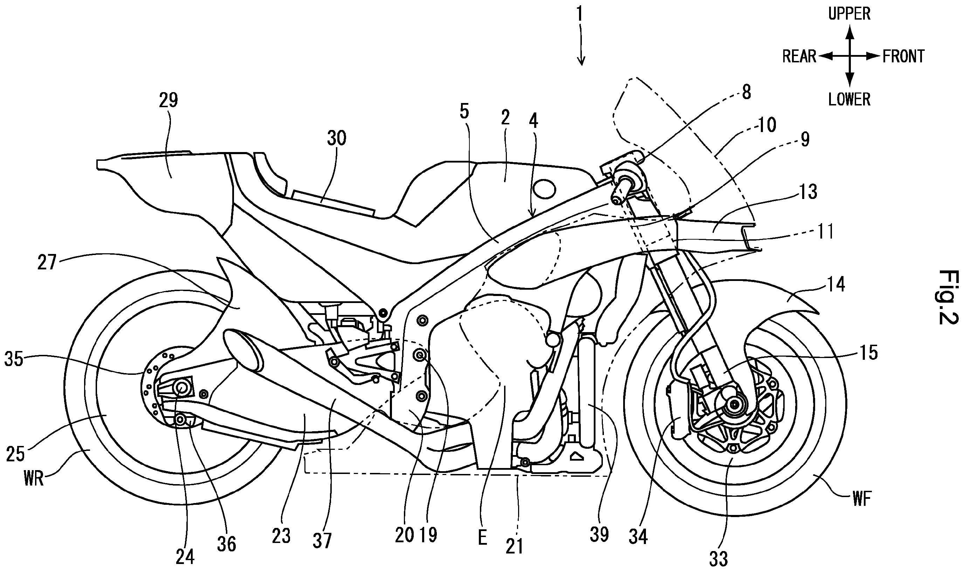

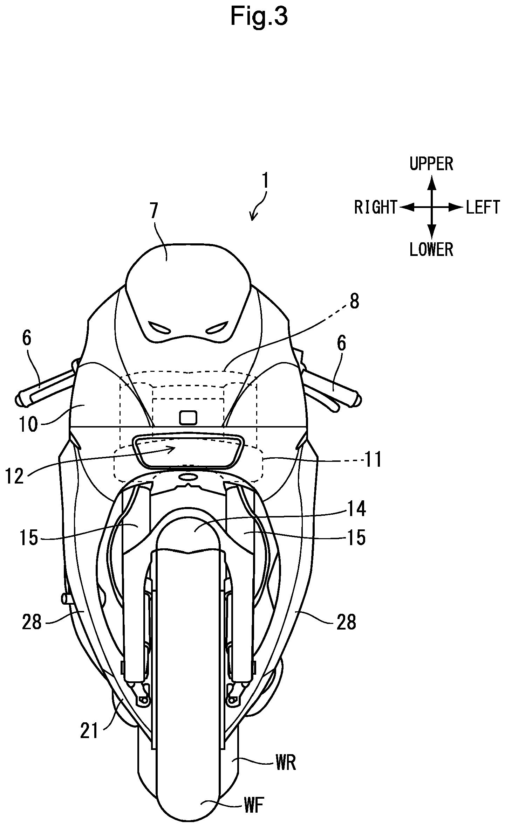

A preferred embodiment of the present invention will be described below, referring to the drawings. FIG. 1 is a left side view of a motorcycle 1 to which an engine hanger structure according to an embodiment of the present invention has been applied. In addition, FIG. 2 is a right side view of the same, and FIG. 3 is a front view of the same. A body frame 4 of the motorcycle 1 as a saddled vehicle has a pair of left and right main frames 5 extending from a head pipe 9 toward a vehicle body rear side. A steering system of a front wheel WF that is shaft-supported in an oscillatable manner by the head pipe 9 includes: a pair of left and right front forks 15 shaft-supporting the front wheel WF by an axle 17; a top bridge 8 and a bottom bridge 11 that clamp the front forks 15 on the upper and lower sides of the head pipe 9; and a steering stem (not depicted) rotatably supported by the head pipe 9 while interconnecting the top bridge 8 and the bottom bridge 11. A pair of left and right brake disks 33 are fixed to a wheel 16 of the front wheel WF, and they constitute a hydraulic brake system on the front wheel WF side together with a front brake caliper 34 fixed to the front forks 15. A steering handlebar 6 is fixed to upper portions of the front forks 15.

A pair of left and right pivot plates 20 which support a pivot 19 shaft-supporting a swing arm 23 in an oscillatable manner are connected to rear lower portions of the main frames 5. A four-cycle V-type four-cylinder engine E is fixed to lower portions of the main frames 5. A combustion gas of the engine E is guided through an exhaust pipe to a muffler 37 on the transverse directionally right side. A driving force of the engine E is transmitted to a rear wheel WR shaft-supported at a rear end of the swing arm 23 in a rotatable manner.

A front cowl 10 provided with a windscreen 7 is disposed on the front side of the head pipe 9. A pair of left and right side cowls 28 are connected to the lower side of the front cowl 10, and an under cowl 21 covering a lower portion of the engine E is connected to lower end portions of the side cowls 28. A front fender 14 covering an upper portion of the front wheel WF is fixed to the front forks 15. A tank cover 2 covering upper portions of a fuel tank 31 and an air cleaner box 3 is attached to upper portions of the main frames 5. A rear cowl 29 is disposed on the rear side of a seat 30 attached to the tank cover 2. A rear fender 27 covering an upper portion of the rear wheel WR is fixed to an upper portion of the swing arm 23.

The rear wheel WR is shaft-supported in a rotatable manner by an axle 24 at a rear end portion of the swing arm 23. The driving force outputted from an output shaft 18 of the engine E is transmitted through a drive chain (not depicted) to a driven sprocket 26 fixed to a transverse directionally left side of a wheel 25 of the rear wheel WR. A brake disk 35 is fixed to a transverse directionally right side of the wheel 25 of the rear wheel WR, and it constitutes a hydraulic brake system on the rear wheel WR side together with a rear brake caliper 36 disposed on a lower side of the swing arm 23. The swing arm 23 is suspended from the body frame 4 by a rear cushion 32 disposed on the rear side of the pivot 19.

A pair of left and right air ducts 13 for guiding outside air to a lower portion of the air cleaner box 3 is disposed on transverse directionally outer sides of the main frames 5. The air ducts 13 pass on the transverse directionally outer sides of the front forks 15 to join each other on the front side of the head pipe 9, and to be connected to an opening 12 provided in the transverse directional center of the front cowl 10. A radiator 39 is disposed on a vehicle body front side of the engine E. The center of gravity G of the motorcycle 1 according to the present embodiment is located at the transverse directional center in the vicinity of rear ends of the air ducts 13.

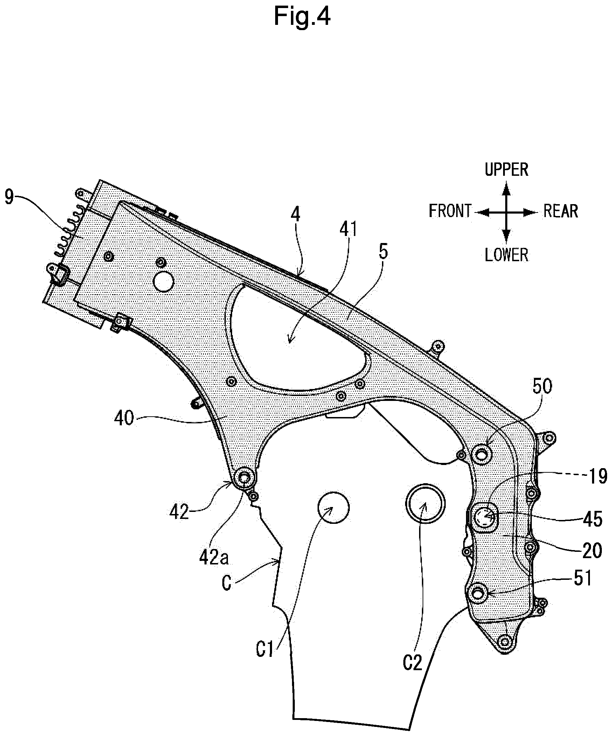

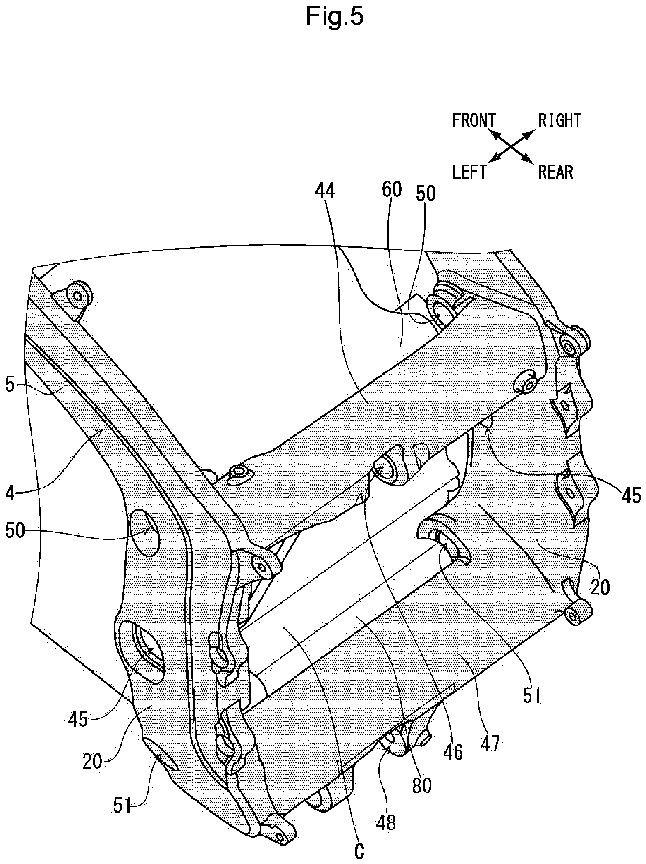

FIG. 4 is a left side view of a body frame 4 supporting a crankcase C of an engine E. FIG. 5 is a partially enlarged view of the body frame 4. The body frame 4, which is formed from a metal such as aluminum, includes: a pair of left and right main frames 5 extending rearwardly downward from positions near the upper side of a head pipe 9; a pivot plate 20 connected to rear end portions of the main frames 5; and a pair of left and right hanger frames 40 extending rearwardly downward from positions near the lower side of the head pipe 9. The hanger frame 40 extending downward from the main frame 5 is formed with an opening 41 through which to pass an air duct 13 (see FIG. 1) for introducing outside air into an air cleaner box 3.

The pivot plate 20 has a substantially rectangular shape elongated in the vertical direction in side view of a vehicle body, and is formed, at a position which is vertically substantially central and near a vehicle body front side thereof, with a through-hole 45 for supporting a pivot (hereinafter sometimes referred to as pivot shaft) 19 shaft-supporting a swing arm 23.

The crankcase C of the engine E is formed with a shaft-supporting opening C1 for a crankshaft and a shaft-supporting opening C2 for an output shaft. The crankcase C, which is formed by cutting out from an aluminum block, is supported on the body frame 4 by front-side engine hanger portions 42 provided at lower end portions of the hanger frame 40 and upper-side engine hanger portions 50 and lower-side engine hanger portions 51 which are provided in the pivot plates 20. The upper-side engine hanger portions 50 and the lower-side engine hanger portions 51 are provided at positions opposite to each other on upper and lower opposite sides of the through-hole 45 of the pivot shaft 19.

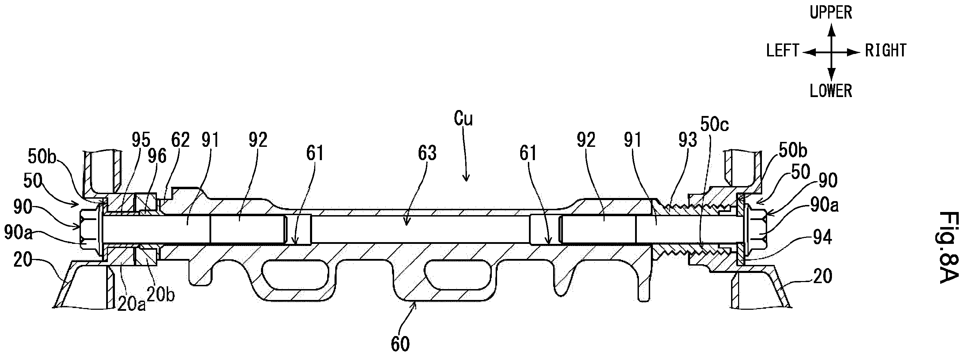

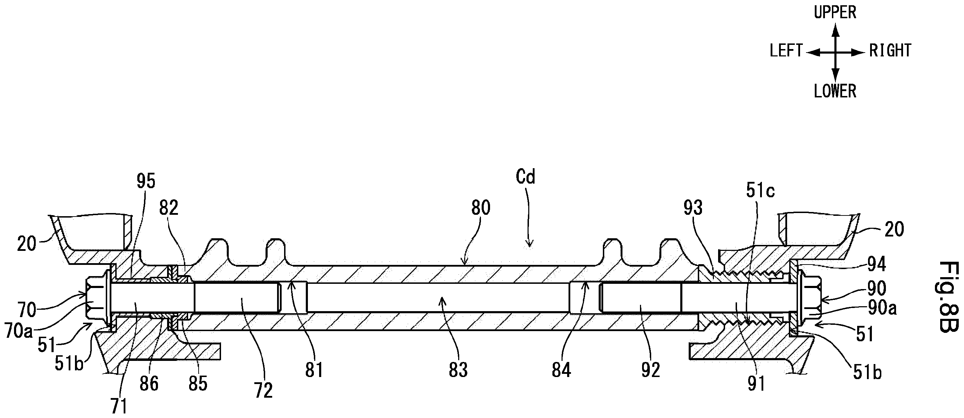

The front-side engine hanger portions 42, the upper-side engine hanger portions 50 and the lower-side engine hanger portions 51 are formed respectively with through-holes through which to pass bolts for supporting the crankcase C. At the front-side engine hanger portions 42, a front end portion of the crankcase C is supported by a long through bolt 42a which penetrates the front end portion of the crankcase C in the transverse direction. At the upper-side engine hanger portions 50 and the lower-side engine hanger portions 51, a rear end upper portion of the crankcase C and a rear end lower portion of the crankcase C are respectively supported by pairs of left and right short bolts (see FIG. 8).

The engine hanger structure according to the present embodiment is characterized in that left and right short bolts as separate bodies are used as bolts for supporting the upper-side engine hanger portions 50 and the lower-side engine hanger portions 51 which support a rear portion of the crankcase C, thereby enhancing support rigidity. On the other hand, at a front portion of the engine E where some flexibility is demanded, the through bolt 42a is used, which, together with the flexibility possessed by the hanger frame 40 itself, makes it possible to obtain a running feeling in which the flexibility of the long bolt is made the most of.

Referring to FIG. 5, the left and right pivot plates 20 are connected to each other by an upper-side cross frame 44 and a lower-side cross frame 47 which are oriented in the transverse direction. The upper-side cross frame 44 is located on the vehicle body rear side of the upper-side engine hanger portions 50, and the upper-side cross frame 44 is formed at a transverse directional center thereof with a rear cushion support portion 46 for shaft-supporting an upper end portion of a rear cushion 32 in a swingable manner. The lower-side cross frame 47 is located on the vehicle body rear side of the lower-side engine hanger portions 51, and the lower-side cross frame 47 is formed at a lower surface in a transverse directional center thereof with a link rod support portion 48 for shaft-supporting, in a swingable manner, a link rod (not depicted) connected to a link mechanism of the rear cushion 32.

An upper-side extension portion 60 to be accommodated between the left and right upper-side engine hanger portions 50 is formed at a rear end upper portion of the crankcase C. A lower-side extension portion 80 to be accommodated between the left and right lower-side engine hanger portions 51 is formed at a rear end lower portion of the crankcase C. In the engine hanger structure according to the present embodiment, instead of extending stay members from the body frame 4 side for supporting the crankcase C, the extension portions 60 and 80, which are large in width, are provided on the crankcase C side, and the extension portions 60 and 80 are fixed in the manner of being surrounded by high-rigidity members including the pivot plates 20 and the upper and lower cross frames 44 and 47, whereby support rigidity of a rear portion of the crankcase C is enhanced.

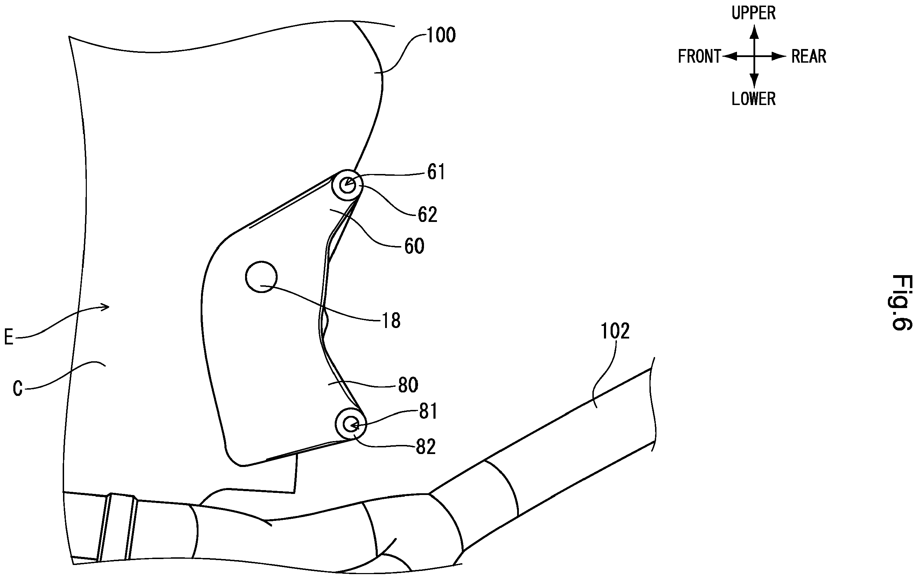

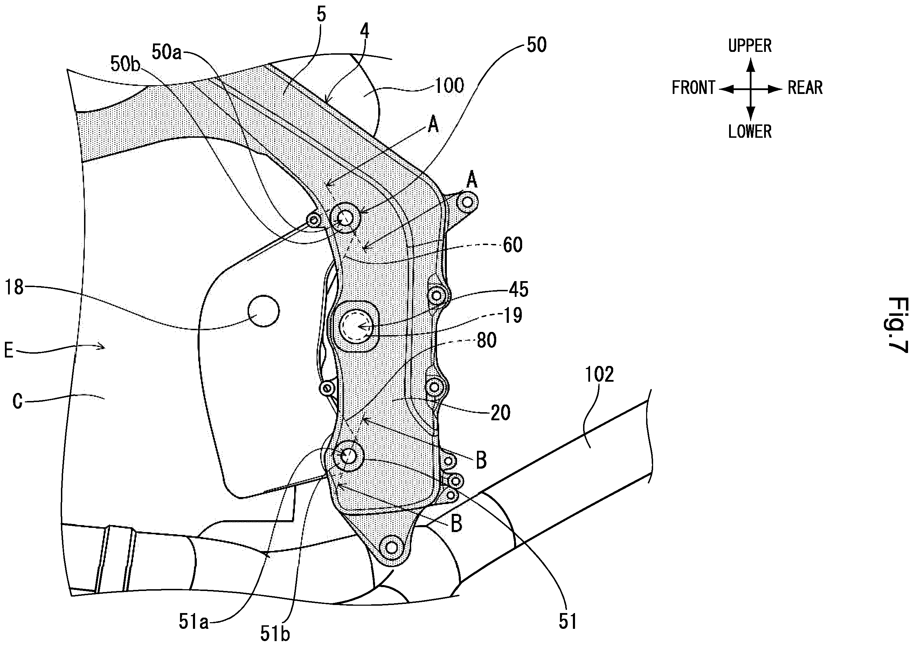

FIG. 6 is an enlarged side view of a rear portion of the engine E. FIG. 7 is an enlarged side view of a state in which the body frame 4 is added to FIG. 6. In the shaft-supporting opening C2 (see FIG. 4) formed in the crankcase C, there is shaft-supported an output shaft 18 to which a drive sprocket (not depicted) for wrapping a drive chain (not depicted) therearound is fixed. The upper-side extension portion 60 is formed to extend rearwardly upward from the position of the output shaft 18 in side view of the vehicle body, and the lower-side extension portion 80 is formed to extend toward the rear lower side of the output shaft 18.

A boss 62 having a female screw portion 61 and a circular bearing surface is formed at an end portion of the upper-side extension portion 60. Similarly, a boss 82 having a female screw portion 81 and a circular bearing surface is formed at an end portion of the lower-side extension portion 80. An upper portion of the upper-side extension portion 60 is located at a position proximate to a rear-side cylinder 100 of the engine E, which is a V-type four-cylinder engine, and an exhaust pipe (not depicted) of the rear-side cylinder 100 is laid between the upper-side extension portion 60 and the rear-side cylinder 100. Under the lower-side extension portion 80, an exhaust pipe 102 of a front-side cylinder is laid proximate to a lower surface of the lower-side cross frame 47.

In the engine hanger structure according to the present embodiment, the upper-side extension portion 60 provided at the rear end upper portion of the crankcase C and the lower-side extension portion 80 provided at the rear end lower portion of the crankcase C are supported by the left and right pivot plates 20 in the manner of clamping therebetween. By this, the rear portion of the crankcase C is supported by the left and right pivot plates 20 and support rigidity is thereby enhanced, while laying out the output shaft 18 and the pivot 19 as proximate as possible to each other and making the swing arm 23 longer.

The upper-side engine hanger portion 50 formed in the pivot plate 20 has a through-hole 50a through which to pass a bolt shaft portion of a short bolt to be described later, and a recess 50b in which to accommodate a bolt head portion. Similarly, the lower-side engine hanger portion 51 has a through-hole 51a through which to pass a bolt shaft portion, and a recess 51b in which to accommodate a bolt head portion.

FIG. 8A is a sectional view taken along line A-A of FIG. 7. FIG. 8B is a sectional view taken along line B-B of FIG. 7. The upper-side engine hanger portion 50 depicted in FIG. 8A and the lower-side engine hanger portion 51 depicted in FIG. 8B are both supported from transverse directionally outer sides by short bolts 90 and 70. The bolts 90 and 70 include three first bolts 90 as common parts, and only the second bolt 70 put in screw engagement with the lower-side extension portion 80 on the transverse directionally left side is specified to be shorter than the first bolts 90. Specifically, a basic configuration of having a hexagonal head portion 90a or 70a, a shaft portion 91 or 71 and a male screw portion 92 or 72 is common, but the shaft portion 71 of the second bolt 70 is shorter than the shaft portions 91 of the first bolts 90.

The upper-side extension portion 60 is formed with the female screw portions 61 at left and right end portions thereof. The female screw portions 61 on both sides are connected by a small-diameter hollow portion 63. Similarly, the lower-side extension portion 80 is formed with the female screw portions 81 at left and right end portions thereof. The female screw portions 81 on both sides are connected by a small-diameter hollow portion 83. The transverse directional sizes of the hollow portions 63 and 83 are individually set larger than the transverse directional sizes of the female screw portions 61 and 81.

The through-hole 50a of the pivot plate 20 at the right upper side in the drawing is formed with a female screw 50c, and a hollow collar 93 formed with a male screw is put into screw engagement with the female screw 50c from a transverse directionally inner side. Next, the first bolt 90 is fastened with a washer 94 in contact with the recess 50b serving as a bearing surface, whereby the upper-side extension portion 60 is fixed in the state of being located near the transverse directionally right side.

Similarly, the through-hole 51a of the pivot plate 20 on the right lower side in the drawing is formed with a female screw 51c, and a hollow collar 93 formed with a male screw is put into screw engagement with the female screw 51c from a transverse directionally inner side. Next, the first bolt 90 is fastened with a washer 94 in contact with the recess 51b serving as a bearing surface, whereby the lower-side extension portion 80 is fixed in the state of being located near the transverse directionally right side.

The through-hole 50a of the pivot plate 20 on the left upper side in the drawing is not formed with a female screw, and a flanged cylindrical collar 95 is inserted therein. A ring collar 20b for width adjustment is in contact with the inside of a cylindrical boss 20a supporting the flanged cylindrical collar 95. On an inner peripheral surface of the ring collar 20b, a flanged collar 96 having a flange portion to be sandwiched between the ring collar 20b and the boss 62 is inserted, and, by fastening the first bolt 90, the left side of the upper-side extension portion 60 is fixed.

The through-hole 51a of the pivot plate 20 on the left lower side in the drawing is not formed with a female screw, and a flanged cylindrical collar 95 is inserted therein. Between the cylindrical boss 20a supporting the flanged cylindrical collar 95 and the boss 82 of the lower-side extension portion 80, two flanged collars 85 and 86 for width adjustment are inserted in a mutual contact state, and, by fastening the second bolt 70, the left side of the lower-side extension portion 80 is fixed.

The shaft portion 71 of the second bolt 70 is short for the reason that the female screw 81 formed on the left side of the lower-side extension portion 80 is located on the transverse directionally outer side as compared to the female portions at the other three locations. With the shaft portion 71 set short, a screw engagement allowance similar to those at the other three locations is secured. Each of the bolts and collars can be formed from a metal such as stainless steel and titanium. The female screw portions 61 on both sides of the upper-side extension portion 60 and the female screw portion 84 on the right side of the lower-side extension portion 80 may be formed by embedding a helisert while avoiding a thin wall portion of the crankcase C.

According to the engine hanger structure of the present embodiment, the rear portion of the engine E is supported by the bolts 90 and 70 which are independent on the transverse directionally left and right sides, whereby support rigidity of the engine rear portion can be enhanced, as compared to the case where a through bolt susceptible to flexure under an external force generated during running is applied. With the engine hanger portions 50 and 51 provided at positions opposite to each other on the upper and lower sides in the vicinity of the pivot 19, the support rigidity of the engine rear portion is further enhanced.

Further, the pivot plate 20 has a substantially rectangular shape elongated in a vertical direction in side view of a vehicle body, and the upper-side engine hanger portion 50 and the lower-side engine hanger portion 51 are configured by through-holes 50a, 51a formed in the pivot plate 20. Therefore, support rigidity of the engine hanger portion can be enhanced, as compared to a configuration in which a stay-formed engine hanger portion extends to a vehicle body front side of the pivot plate 20.

Further, the upper-side extension portion 60 is supported by the upper-side engine hanger portion 50 on a vehicle body upper side of the pivot shaft 19, whereas the lower-side extension portion 80 is supported by the lower-side engine hanger portion 51 on a vehicle body lower side of the pivot shaft 19. Therefore, it is possible to support a rear portion of the engine by the upper and lower extension portions, while avoiding interference between the engine rear portion and the pivot.

Further, the upper-side extension portion 60 and the lower-side extension portion 80 are each formed to extend in the transverse direction, female screw portions 61, 81 in a pair in the transverse direction in which the bolts 70, 90 are put in screw engagement are formed on a same axis, and the female screw portions 61, 81 in the pair in the transverse direction communicate with each other through a hollow portion 63, 83. Therefore, an increase in weight of the extension portions can be suppressed by providing the hollow portions, while enhancing support rigidity by extending the extension portions in the transverse direction.

The type and shape of the engine, the shapes and materials of the swing arm and the crankcase, the shapes and sizes of the upper-side extension portion and the lower-side extension portion, the shapes and sizes of the first bolts and the second bolt, the shapes and sizes of the female screw portions and the hollow portions, the shapes and sizes of the various collars, and the like are not limited to those in the above embodiment, and various modifications are possible. The engine hanger structure according to the prevent invention is applicable not only to motorcycles but also to three-wheeled vehicles and the like having a swing arm shaft-supported on a body frame in a swingable manner.
The engine hanger structure is applied to a saddled vehicle (1) which includes a swing arm (23) shaft-supporting a rear wheel (WR) in a rotatable manner, a pivot shaft (19) shaft-supporting the swing arm (23) in a swingable manner at a rear portion of a body frame (4), and an engine (E) supported on the body frame (4). A pivot plate (20) shaft-supporting the pivot shaft (19) and extending on upper and lower sides of the pivot shaft (19) is provided at a rear end portion of the body frame (4). An upper-side engine hanger portion (50) and a lower-side engine hanger portion (51) are provided at positions opposite to each other on upper and lower opposite sides of the pivot shaft (19). A rear portion of the engine (E) is supported on the engine hanger portions (50, 51) by a pair of bolts (70, 90) making screw engagement with the engine (E) at positions opposite to each other in the transverse direction.

### Explanation of sign

1...motorcycle (saddled vehicle), 4...body frame, 19...pivot shaft, 20...pivot plate, 40...hanger frame, 42...front-side engine hanger portion, 42a...through bolt, 50...upper-side engine hanger portion, 50a, 51a...through-hole, 50b, 51b...recess, 51...lower-side engine hanger portion, 60...upper-side extension portion, 61, 81...female screw portion, 63, 83...hollow portion, 70...second bolt, 70a , 90a...head portion, 80...upper-side extension portion, 90...first bolt, C...crankcase, E...engine

## Claims

1. An engine hanger structure to be applied to a saddled vehicle (1) which includes a body frame (4), a swing arm (23) shaft-supporting a rear wheel (WR) in a rotatable manner, a pivot shaft (19) shaft-supporting the swing arm (23) in a swingable manner at a rear portion of the body frame (4), and an engine (E) supported on the body frame (4),
wherein a pivot plate (20) shaft-supporting the pivot shaft (19) and extending on upper and lower sides of the pivot shaft (19) is provided at a rear end portion of the body frame (4),
an upper-side engine hanger portion (50) and a lower-side engine hanger portion (51) are provided at positions opposite to each other on upper and lower opposite sides of the pivot shaft (19), and **characterized in that**,
a rear portion of the engine (E) is supported on the upper-side engine hanger portion (50) and the lower-side engine hanger portion (51) by a pair of bolts (70, 90) making screw engagement with the engine (E) at positions opposite to each other in a transverse direction.

2. The engine hanger structure according to claim 1,
wherein the pivot plate (20) has a substantially rectangular shape elongated in a vertical direction in side view of a vehicle body, and
the upper-side engine hanger portion (50) and the lower-side engine hanger portion (51) are configured by through-holes (50a, 51a) formed in the pivot plate (20).

3. The engine hanger structure according to claim 1 or 2,
wherein an upper-side extension portion (60) projecting toward the upper-side engine hanger portion (50) and a lower-side extension portion (80) extending toward the lower-side engine hanger portion (51) are formed at a rear portion of the engine (E), and
the upper-side extension portion (60) is supported by the upper-side engine hanger portion (50) on a vehicle body upper side of the pivot shaft (19), whereas the lower-side extension portion (80) is supported by the lower-side engine hanger portion (51) on a vehicle body lower side of the pivot shaft (19).

4. The engine hanger structure according to claim 3,
wherein the upper-side extension portion (60) and the lower-side extension portion (80) are each formed to extend in the transverse direction,
female screw portions (61, 81) in a pair in the transverse direction in which the bolts (70, 90) are put in screw engagement are formed on a same axis, and
the female screw portions (61, 81) in the pair in the transverse direction communicate with each other through a hollow portion (63, 83).

5. The engine hanger structure according to claim 4, wherein transverse directional sizes of the hollow portions (63, 83) are larger than transverse directional sizes of the female screw portions (61, 81).

6. The engine hanger structure according to any one of claims 1 to 5,
wherein the bolts (70, 90) have head portions (70a, 90a) which are hexagonal in sectional shape, and
recesses (50b, 51b) in which to accommodate the head portions (70a, 90a) are provided on transverse directionally outside of the upper-side engine hanger portion (50) and the lower-side engine hanger portion (51).

7. The engine hanger structure according to any one of claims 1 to 6,
wherein the body frame (4) is provided with a front-side engine hanger portion (42) supporting a front portion of the engine (E), and
the front portion of the engine (E) is supported on the front-side engine hanger portion (42) by a long through bolt (42a) penetrating the engine (E).

8. The engine hanger structure according to claim 7, wherein the front-side engine hanger portion (42) is formed at lower end portions of a pair of left and right hanger frames (40) extending rearwardly downward from a head pipe (9) constituting the frame (4).

## Patentansprüche

1. Motoraufhängungsstruktur zur Anwendung an einem Sattelfahrzeug (1), das einen Rumpfrahmen (4), einen Schwingarm (23), der ein Hinterrad (WR) drehbar wellen-lagert, eine Schwenkwelle (19), die den Schwingarm (23) an einem hinteren Abschnitt des Rumpfrahmens (4) schwenkbar wellen-lagert, sowie einen Motor (E), der an dem Rumpfrahmen (4) gelagert ist, enthält, wobei eine Anlenkplatte (20), die die Schwenkwelle (19) wellen-lagert und sich an oberen und unteren Seiten der Schwenkwelle (19) erstreckt, an einem hinteren Endabschnitt des Rumpfrahmens (4) vorgesehen ist,
ein oberseitiger Motoraufhängungsabschnitt (50) und ein unterseitiger Motoraufhängungsabschnitt (51) an einander entgegengesetzten Position an oberen und unteren entgegengesetzten Seiten der Schwenkwelle (19) vorgesehen sind, und **dadurch gekennzeichnet, dass**
ein hinterer Abschnitt des Motors (E) an dem oberseitigen Motoraufhängungsabschnitt (50) und dem unterseitigen Motoraufhängungsabschnitt (51) durch ein Bolzenpaar (70, 90) gelagert ist, das einen Schraubeingriff mit dem Motor (E) an in Querrichtung einander entgegengesetzten Positionen herstellt.

2. Die Motoraufhängungsstruktur nach Anspruch 1, wobei die Anlenkplatte (20) in Seitenansicht eines Fahrzeugkörpers eine in vertikaler Richtung längliche im Wesentlichen rechteckige Form hat, und
der oberseitige Motoraufhängungsabschnitt (50) und der unterseitige Motoraufhängungsabschnitt (51) durch in der Anlenkplatte (20) ausgebildete Durchgangslöcher (50a, 51a) konfiguriert sind.

3. Die Motoraufhängungsstruktur nach Anspruch 1 oder 2,
wobei ein oberseitiger Verlängerungsabschnitt (60), der zu dem oberseitigen Motoraufhängungsabschnitt (50) hin vorsteht, und ein unterseitiger Verlängerungsabschnitt (80), der sich zu dem unterseitigen Motoraufhängungsabschnitt (51) hin erstreckt, an einem hinteren Abschnitt des Motors (E) ausgebildet sind, und
der oberseitige Verlängerungsabschnitt (60) von dem oberseitigen Motoraufhängungsabschnitt (50) an einer Fahrzeugrumpf-Oberseite der Schwenkwelle (19) gelagert ist, während der unterseitige Verlängerungsabschnitt (80) von dem unterseitigen Motoraufhängungsabschnitt (51) an einer Fahrzeugrumpf-Unterseite der Schwenkwelle (19) gelagert ist.

4. Die Motoraufhängungsstruktur nach Anspruch 3,
wobei der oberseitige Verlängerungsabschnitt (60) und der unterseitige Verlängerungsabschnitt (80) jeweils so ausgebildet sind, dass sie sich in der Querrichtung erstrecken,
Innengewindeabschnitte (61, 81), in die die Bolzen (70, 90) in Schraubeingriff gesetzt sind, in einem Paar in der Querrichtung auf einer gleichen Achse ausgebildet sind, und
die Innengewindeabschnitte (61, 81) in dem Paar in der Querrichtung durch einen hohlen Abschnitt (63, 83) miteinander kommunizieren.

5. Die Motoraufhängungsstruktur nach Anspruch 4, wobei die Querrichtungs-Abmessungen der hohlen Abschnitte (63, 83) größer sind als die Querrichtungs-Abmessungen der Innengewindeabschnitte (61, 81).

6. Die Motoraufhängungsstruktur nach einem der Ansprüche 1 bis 5,
wobei die Bolzen (70, 90) Kopfabschnitte (70a, 90a) mit sechseckiger Querschnittsform haben, und
Ausnehmungen (50b, 51b), welche die Kopfabschnitte (70a, 90a) aufnehmen, in Querrichtung außerhalb des oberseitigen Motoraufhängungsabschnitts (50) und des unterseitigen Motoraufhängungsabschnitts (51) vorgesehen sind.

7. Die Motoraufhängungsstruktur nach einem der Ansprüche 1 bis 6,
wobei der Rumpfrahmen (4) mit einem vorderseitigen Motoraufhängungsabschnitt (42) versehen ist, der einen vorderen Abschnitt des Motors (E) lagert, und
der vordere Abschnitt des Motors (E) an dem vorderseitigen Motoraufhängungsabschnitt (42) durch einen den Motor (E) durchsetzenden langen Durchgangsbolzen (42a) gelagert ist.

8. Die Motoraufhängungsstruktur nach Anspruch 7, wobei der vorderseitige Motoraufhängungsabschnitt (42) an unteren Endabschnitten eines Paars linker und rechter Aufhängungsrahmen (40) ausgebildet ist, die sich von einem den Rahmen (4) darstellenden Kopfrohr (9) nach hinten abwärts erstrecken.

## Revendications

1. Structure de suspension de moteur à appliquer à un véhicule à selle (1) qui comporte un châssis de carrosserie (4), un bras oscillant (23) supportant par arbre une roue arrière (WR) de manière rotative, un arbre de pivot (19) supportant par arbre le bras oscillant (23) de manière oscillante au niveau d'une partie arrière du châssis de carrosserie (4), et un moteur (E) supporté sur le châssis de carrosserie (4),
dans laquelle une plaque de pivot (20) supportant par arbre l'arbre de pivot (19) et s'étendant sur des côtés supérieur et inférieur de l'arbre de pivot (19) est prévue au niveau d'une partie d'extrémité arrière du châssis de carrosserie (4),
une partie de suspension de moteur du côté supérieur (50) et une partie de suspension de moteur du côté inférieur (51) sont prévues à des positions opposées l'une à l'autre sur des côtés opposés supérieur et inférieur de l'arbre de pivot (19), et **caractérisée en ce que**
une partie arrière du moteur (E) est supportée sur la partie de suspension de moteur du côté supérieur (50) et la partie de suspension de moteur du côté inférieur (51) par une paire de boulons (70, 90) se mettant en prise par vissage avec le moteur (E) à des positions opposées l'une à l'autre dans une direction transversale.

2. Structure de suspension de moteur selon la revendication 1,
dans laquelle la plaque de pivot (20) a une forme sensiblement rectangulaire allongée dans une direction verticale en vue latérale d'une carrosserie de véhicule, et
la partie de suspension de moteur du côté supérieur (50) et la partie de suspension de moteur du côté inférieur (51) sont configurées par des trous traversants (50a, 51a) formés dans la plaque de pivot (20).

3. Structure de suspension de moteur selon la revendication 1 ou 2,
dans laquelle une partie d'extension du côté supérieur (60) faisant saillie vers la partie de suspension de moteur du côté supérieur (50) et une partie d'extension du côté inférieur (80) s'étendant vers la partie de suspension de moteur du côté inférieur (51) sont formées au niveau d'une partie arrière du moteur (E), et
la partie d'extension du côté supérieur (60) est supportée par la partie de suspension de moteur du côté supérieur (50) sur un côté supérieur de carrosserie de véhicule de l'arbre de pivot (19), tandis que la partie d'extension du côté inférieur (80) est supportée par la partie de suspension de moteur du côté inférieur (51) sur un côté inférieur de carrosserie de véhicule de l'arbre de pivot (19).

4. Structure de suspension de moteur selon la revendication 3,
dans laquelle la partie d'extension du côté supérieur (60) et la partie d'extension du côté inférieur (80) sont chacune formées pour s'étendre dans la direction transversale,
des parties de vis femelles (61, 81) en paire dans la direction transversale dans laquelle les boulons (70, 90) se mettent en prise par vissage sont formées sur un même axe, et
les parties de vis femelles (61, 81) en paire dans la direction transversale communiquent l'une avec l'autre à travers une partie creuse (63, 83).

5. Structure de suspension de moteur selon la revendication 4, dans laquelle des dimensions directionnelles transversales des parties creuses (63, 83) sont plus grandes que des dimensions directionnelles transversales des parties de vis femelles (61, 81).

6. Structure de suspension de moteur selon l'une quelconque des revendications 1 à 5,
dans laquelle les boulons (70, 90) ont des parties de tête (70a, 90a) qui sont de forme hexagonale en section, et
des évidements (50b, 51b) dans lesquels les parties de tête (70a, 90a) doivent être reçues sont prévus sur un extérieur de direction transversale de la partie de suspension de moteur du côté supérieur (50) et de la partie de suspension de moteur du côté inférieur (51).

7. Structure de suspension de moteur selon l'une quelconque des revendications 1 à 6,
dans laquelle le châssis de carrosserie (4) est pourvu d'une partie de suspension de moteur du côté avant (42) supportant une partie avant du moteur (E), et
la partie avant du moteur (E) est supportée sur la partie de suspension de moteur du côté avant (42) par un long boulon traversant (42a) pénétrant dans le moteur (E).

8. Structure de suspension de moteur selon la revendication 7, dans laquelle la partie de suspension de moteur du côté avant (42) est formée au niveau de parties d'extrémité inférieures d'une paire de châssis de suspension gauche et droit (40) s'étendant vers l'arrière et vers le bas à partir d'un tube de tête (9) constituant le châssis (4).
